# EUROPÄISCHE PATENTSCHRIFT

(11) **EP 2 629 922 B1**
(45) Veröffentlichungstag und Bekanntmachung des Hinweises auf die Patenterteilung: **25.03.2015**
(21) Anmeldenummer: 11764687.7
(22) Anmeldetag: 04.10.2011
(51) Int. Cl.: B23K 26/06, B23K 26/38, B23K 26/04, H02K 1/14, H02K 15/02

(54) **VERFAHREN ZUM LASERSCHNEIDEN EINES ELEKTROBANDMATERIALS DURCH ANGEPASSTEN LASERSTRAHLLEISTUNG,FOKUSDURCHMESSER UND VORSCHUB DES LASERSTRAHLES ; ENTSPRECHENDES ELEKTROBLECH-WERKSTÜCK**
PROCESS FOR LASER CUTTING AN ELECTRIC STRIP MATERIAL BY ADAPTED LASER BEAM OUTPUT, FOCUS DIAMETER AND ADVANCEMENT OF THE LASER BEAM ; CORRESPONDING ELECTRIC STRIP MATERIAL
PROCÉDÉ POUR LE DÉCOUPAGE AU LASER D'UNE MATIÈRE DE FEUILLARD MAGNÉTIQUE UTILISANT UNE PUISSANCE DE RAYON LASER, UN DIAMÈTRE DE FOYER ET UNE AVANCE DU RAYON LASER ADAPTÉS ; FEUILLARD MAGNETIQUE CORRESPONDANT

(30) Priorität: 23.10.2010 DE 102010049428
(43) Veröffentlichungstag der Anmeldung: 28.08.2013
(73) Patentinhaber: Volkswagen Aktiengesellschaft, 38440 Wolfsburg (DE)
(72) Erfinder: MAKOWSKA, Agnieszka, 90763 Fürth (DE); FERKEL, Hans, 45478 Mühlheim an der Ruhr (DE); DEMMLER, Mirko, 38315 Hornburg (DE); HAMMER, Thorge, 38479 Tappenbeck (DE); SCHUMANN, Sönke, 38179 Schwülper (DE)
(86) Internationale Anmeldenummer: PCT/EP2011/004939
(87) Internationale Veröffentlichungsnummer: WO 2012/052115

(56) Entgegenhaltungen:
- WO-A2-2009/007708
- DE-A1-102008 047 761
- DE-A1-102009 060 908
- US-A- 5 578 228
- US-A1- 2002 194 723
- US-A1- 2006 028 087

## Beschreibung

Die Erfindung betrifft ein Verfahren zum Laserschneiden eines Elektrobandmaterials sowie eine Elektrobandmagnetkomponente, jeweils nach dem Oberbegriff der unabhängigen Patentansprüche (siehe, z.B., US 5 578 228 A).

Ein aufgrund seiner typischen magnetischen Eigenschaften besonders wichtiges Stahlmaterial ist Elektroband bzw. Elektroblech, das als weichmagnetischer Werkstoff im äußeren Magnetfeld besonders einfach magnetisierbar sowie entmagnetisierbar ist und in elektromagnetischen Systemen für Energieerzeugung, Energieübertragung und -verteilung sowie in der Nutzbarmachung von elektrischer Energie in Motoren eingesetzt wird. In einem mehrstufigen Herstellungsprozess werden Elektrobänder üblicherweise unter anderem mit Werkzeugen zum Stanzen und Schneiden verarbeitet und zu elektromagnetischen Komponenten geschichtet, paketiert und fixiert. Dabei werden die magnetischen Eigenschaften, beispielsweise spezifische Ummagnetisierungsverluste, und Permeabilität, und daher auch die Energieeffizienz der Komponenten, entscheidend durch die Bearbeitung, insbesondere durch Schneiden und Stanzen des Elektrobandes beeinflusst.

Grundsätzlich wird bei Elektroband zwischen nichtkornorientiertem und komorientiertem Material unterschieden, wie beispielsweise ausgeführt ist im Merkblatt 401 des Stahl-Informations-Zentrum, ISSN 175-2006. Nichtkornorientiertes Elektroband weist ein polykristallines Gefüge mit Korngrößen zwischen 20 µm und 200 µm auf, wobei die Kristallite im idealerweise isotrop ohne Vorzugsrichtung in einer Ebene der Fläche (100) angeordnet sind, wobei sich versteht, dass im realen nichtkornorientiertem Elektroband eine Kornorientierung mit geringer Anisotropie vorliegt, üblicherweise beispielsweise mit Verlustunterschieden zwischen einer Längs- und einer Querrichtung von max. 20 %. Nichtkornorientiertes Elektroband wird häufig nach einem Beizen von Warmbändern und einem Kaltwalzen zur Einstellung einer gewünschten Enddicke, beispielsweise zwischen 0,20 mm und 1,00 mm schlussgeglüht, wobei das Materialgefüge mit gewünschten magnetischen Eigenschaften eingestellt wird.

Bei kornorientiertem Elektroband wird ein Material mit einheitlicher Orientierung der Kristallite hergestellt, die ein stark anisotropes Verhalten im Magnetfeld bewirken. Üblicherweise wird versucht eine kristallographische Textur zu erreichen, wobei eine Würfelkante in Walzrichtung und eine Flächendiagonale quer zur Walzrichtung orientiert ist. Die Größe der Kristallite bei kornorientiertem Elektroband beträgt üblicherweise mehrere Millimeter bis Zentimeter. Zur Senkung von Ummagnetisierungsverlusten ist es dabei bekannt, bei kornorientiertem Elektrobandsorten, beispielsweise mittels Laserbehandlung eine so genannte Domainverfeinerung durchzuführen.

Sowohl bei nichtkornorientiertem schlussgeglühtem als auch bei kornorientiertem Elektroband ist bei der Herstellung von Bauteilen aus Elektroband, insbesondere Stator- oder Rotorkomponenten wie beispielsweise Blechlamellen durch Trennverfahren, beispielsweise Stanzen und Schneiden zu beachten, dass die magnetischen Eigenschaften durch werkstoffliche Veränderungen, insbesondere plastische Verformung, die durch die Trennverfahren in den Randbereichen des getrennten Materials entstehen in unerwünschter Weise beeinflusst werden. Bei mechanischen Trennverfahren ist dabei insbesondere Materialverformung im Schnittbereich sowie der Verschleiß des zum Trennen verwendeten Werkzeugs zu berücksichtigen, während bei Laserverfahren Wärmeeinflusszonen negative Auswirkungen auf die magnetischen Eigenschaften des Materials, vor allem verbunden mit erhöhten Eisenverlusten und Kippen der Hystereseschleife, der sogenannten Remanenzsenkung haben. Dabei spielen insbesondere durch die Trennverfahren induzierte Gefügeänderungen, wie Erhöhung der Defektdichte im getrennten, beispielsweise geschnittenen oder gestanzten Material eine Rolle.

Verfahren zum Laserschneiden von metallischen Werkstücken sind bekannt. Aus der DE 10 2004 039 916 A1 ist beispielsweise ein Verfahren zur Erzeugung einer engen Ausnehmung in einem metallischen Werkstück bekannt, bei dem ein Hochenergiestrahl in das Werkstück eindringt und dort eine Schmelze erzeugt, die mit Unterstützung einer externen Hilfskraft aus der Ausnehmung ausgeworfen wird. Als Hilfskraft wird dabei eine auf die Schmelze wirkende Lorentz-Kraft eingesetzt. Dabei wird das Problem adressiert, dass mit kleiner werdender Dimensionierung der durch den Hochenergiestrahl erzeugten Ausnehmung das Entfernen von Schmelze aus der hergestellten Ausnehmung Probleme bereiten kann. Dabei wird im günstigeren Fall die Arbeitsgeschwindigkeit des Verfahrens beeinträchtigt, im ungünstigen Fall jedoch sogar die Qualität vermindert. Zur Lösung dieses Problems ist auch bekannt, beispielsweise aus der GB 1,088,510, das Auswerfen von Schmelze aus der hergestellten Ausnehmung dadurch zu unterstützen, dass unterhalb des Werkstücks eine leicht verdampfende Substanz angeordnet wird. Durchstößt der Hochenergiestrahl das Werkstück und trifft auf diese Substanz, so verdampft diese. Der hierdurch erzeugte Dampfdruck wirft dann die Schmelze aus der Ausnehmung nach oben aus.

Ferner ist in der EP 1 614 499 A1 bereits vorgeschlagen worden, in einem Verdampfungsverfahren einen gepulsten Laser mit einer sehr hohen Laserintensität von mehr als 108 W/cm² zu verwenden, um damit Siliziumwafer zu schneiden, wobei das zu schneidende Halbleitermaterial unmittelbar verdampft wird. Als alternatives Verfahren wird Laserschneiden mit einer geringeren Laserintensität und längeren Pulsdauern vorgestellt, wobei geschmolzenes Material mittels eines Hochdruckgasjets aus dem Spalt geblasen wird. Ferner wird in der EP 1 614 499 A1 ein Laserschneidverfahren vorgeschlagen, bei dem der Laserstrahl eine derartige Intensität und Pulsdauer aufweist, dass zumindest ein Teil von geschmolzenem Halbleitermaterials verdampft und eine Kraft auf die Schmelze ausübt wird, die damit aus dem Schneidspalt entfernt wird.

Aufgabe der Erfindung ist es, ein das Laserschneiden eines Elektrobandmaterials derart zu verbessern, dass werkstoffliche Veränderungen, die z.B. beim Stanzen entstehen, die zu Eisenverlusten führen, vermieden oder vermindert werden können.

Die Aufgabe wird mit den Merkmalen der unabhängigen Patentansprüche 1 und 10 gelöst.

Bei dem erfindungsgemäßen Verfahren zum Laserschneiden eines Elektrobandmaterials mittels eines Laserstrahls, der auf einer dem Laserstrahl zugeordneten Oberfläche des Elektrobandmaterials eine Kontur abfährt und dabei einen Schneidstrahl erzeugt, ist vorgesehen, dass eine Laserstrahlleistung, ein Fokusdurchmesser und ein Vorschub des Laserstrahls derartig gewählt werden, dass im Einwirkungsbereich des Laserstrahls eine Druckausdehnung von verdampfendem Material zum Ausschleudern von zumindest 60 % des vom Laserstrahl geschmolzenen Materials aus dem Schneidspalt erzeugt wird.

Überraschenderweise wird bei einer erfindungsgemäßen Wahl von Laserstrahlleistung, Fokusdurchmesser und Vorschub des Laserstrahls bei der zumindest 60 % des vom Laserstrahl geschmolzenen Materials aus dem Schneidspalt ausgeschleudert wird, die Gefügeveränderung des Elektrobandmaterials am Schneidrand reduziert bzw. günstig beeinflusst, so dass die Ummagnetisierungsverluste reduziert sind gegenüber schmelzgeschnittenem Elektrobandmaterial, bei dem die Schmelze eines Schneidgases ausgeworfen wird. Elektronenmikroskopische Untersuchungen der Erfinder haben ergeben, dass bei hohen Vorschubgeschwindigkeiten des Laserstrahls amorphe Strukturen an den Schneidflächen des Schneidspalts entstehen können. Die mit dem erfindungsgemäßen Verfahren gegenüber herkömmlichen Laserschneidverfahren erreichbaren Verringerungen der Eisenverluste betragen zwischen 20 % und 30 %.

Weiterhin macht die Erfindung eine schnelle Bearbeitung vom Elektroband mit hohem Al/Si-Gehalt von mehr als 4 % Gew. Möglich, bei denen die herkömmlichen mechanischen Trennverfahren nicht angewendet werden können, weil diese hochlegierten Elektrobänder aufgrund der Ausbildung einer Ordnungsphase hoch spröde sind und sich kaum mechanisch bearbeiten lassen. Das Verfahren kann auch unter Verwendung einer Hilfsschicht eines festen oder fluiden Hilfsstoffs, der leichter verdampfbar ist als das Material des Werkstücks, derart weiter ausgebildet werden, dass die Hilfsschicht auf einer dem Laserstrahl zugewandten Teiloberfläche angeordnet ist, ein Schneidspalt in der genannten Teiloberfläche erzeugt und eine Laserstrahlleistung, ein Fokusdurchmesser und ein Schneidvorschub des Laserstrahls derart gewählt werden, dass im Einwirkungsbereich des Laserstrahls während einer Verdampfungsphase eine Druckausdehnung des Hilfsstoffs zum Ausschleudern von vorzugsweise mindestens 60 % der Schmelze aus dem Schneidspalt erzeugt wird. Als Hilfsstoff kann ein Zinkmaterial oder eine Aluminium-Siliziumverbindung eingesetzt werden.

Ein Verfahren zeichnet sich dadurch aus, das mittels einem mindestens zweifachen Abfahren der Kontur eine Schicht aus Elektrobandmaterial mit einer Dicke zwischen 1 µm und 20 µm in einem Bereich von zumindest 60 % von zumindest einer der Schneidflächen des Schneidspalts und mit einem Volumenanteil von zumindest 5 % mit amorpher Struktur gebildet wird. Bei dem mindestens zweifachen Abfahren der Kontur erfolgt eine schichtweise Ablagerung von Metallschmelze, die aufgrund einer schnellen Abkühlung in einer Schicht mit amorpher Struktur auf zumindest einer der Schneidflächen des Schneidspalts erstarrt. Es hat sich dabei gezeigt, dass die Eisenverluste erheblich reduziert werden, wenn, gemäß der Erfindung zumindest 60 % der Schneidflächen des Schneidspalts mit der Schicht aus zuvor geschmolzenem Elektrobandmaterial versehen sind, wobei der Volumenanteil mit amorpher Struktur zumindest 15 % beträgt. Bevorzugt kann der Volumenanteil auch zumindest 20%, 30%, 40%, 50%, 60%, 70% oder 80% betragen.

Beispielsweise kann bei einem einfachen Abfahren der Kontur im Schneidspalt ein Materialabtrag zwischen 20 µm und 80 µm erfolgen.

Eine weitere Ausführungsform der Erfindung zeichnet sich dadurch aus, dass mittels des Laserschneidens ein Abtragsschneiden des Elektrobandmaterials zur vollständigen Trennung entlang von zumindest einer Teillänge von der Kontur erfolgt, sodass vollständig segmentierte, voneinander getrennte Elektroblechkomponenten mit geringen Eisenverlusten hergestellt werden können. Beispielsweise kann ein EI-Transformator-Kern geschnitten werden.

Eine zweckmäßige Ausführungsform der Erfindung zeichnet sich dadurch aus, dass zumindest Teilbereiche des Elektrobandmaterials vor der Erzeugung des Schneidspalts einer Formung mit einem mechanischen Werkzeug unterworfen werden, so dass das erfindungsgemäße Laserschneiden funktional optimal in den Gesamtbearbeitungsprozess des Werkstücks integriert werden kann, wobei beispielsweise eine Teilung des Elektrobandes in Breitband, Spaltband oder zu Tafeln vor dem Laserschneiden erfolgen kann.

Eine weitere Ausführungsform der Erfindung zeichnet sich dadurch aus, dass ein schlussgeglühtes nichtkornorientiertes Elektroband eingesetzt wird, wobei insbesondere ein nach dem Schlussglühen erreichtes Blechgefüge des Elektrobandes weitgehend aufrecht erhalten werden kann.

Eine weitere Ausführungsform der Erfindung zeichnet sich dadurch aus, dass ein schlussgeglühtes kornorientiertes Elektroband eingesetzt wird, wobei insbesondere eine Kornorientierung nach einer dem Laserschneiden vorhergehenden Glühbehandlung des Elektrobandes aufrecht erhalten werden kann.

Die Erfindung zeichnet sich dadurch aus, dass eine Strahlleistung von mehr als 1500 Watt und weniger als 30.000 W, vorzugsweise zwischen 2000 W und 30.000 W, ein Fokusdurchmesser zwischen 100 µm und 600 µm und eine Vorschubgeschwindigkeit des Laserstrahls von mehr als 500 m/min und weniger als 1.500 m/min, vorzugsweise zwischen 800 m/min und 1.500 m/min eingestellt werden, womit Laserschnitte mit einem vollständigen Auswurf von Schmelze erreicht werden können. Es kann ein gepulster oder kontinuierlich betriebener Laserstrahl verwendet werden.

Eine weitere Ausführungsform der Erfindung zeichnet sich dadurch aus, dass ein Verhältnis Fokusdurchmesser/ Elektrobandmaterialdicke zwischen 2 und 10 eingestellt wird, womit eine derartige Druckausdehnung von verdampfenden Elektromaterial gewährleistet ist, bei der ein signifikanter Anteil von geschmolzenem Elektrobandmaterial aus dem Schneidspalt ausgeschleudert wird. Es versteht sich, dass ab einem sehr kleinen Fokusdurchmesser die verdampfenden Oberflächenschichten sich nicht mehr in den Schneidspalt ausdehnen können, da sich die Breite des Schneidspalts ungünstig im Verhältnis zur Dicke des Blechs entwickelt. Bei einem Laserfokus mit einem Durchmesser von 500 µm und einer Blechdicke von 1.000 µm ergibt sich ein Schachtverhältnis von 2, während bei einem Laserfokusdurchmesser von 100 µm und gleicher Blechdicke ein Schachtverhältnis von 10 resultiert. Vorzugsweise wird das erfindungsgemäße Verfahren mit einem Fokusdurchmesser/ Elektrobandmaterialdicke von nicht mehr als 5 durchgeführt.

Die Aufgabe wird ferner durch ein Elektrobandkomponenten- Werkstück bzw. Magnetfeld leitendes Bauteil gelöst, das sich dadurch auszeichnet, dass Werkstück bzw. Bauteil aus einem Elektroband mittels eines Laserschneidverfahrens nach einem der vorhergehenden Ansprüche zumindest teilweise geschnitten ist. Ein derartiges Werkstück bzw. Bauteil weist vorteilhaft niedrige Eisenverluste auf.

In weiteren Ausbildungen der Erfindung ist vorgesehen, dass die Komponente als Rotor- und/oder Statorlamellenblech eines elektrischen Motors oder Generators ausgebildet ist. Bevorzugt können diese Lamellenbleche für Motoren mit Umdrehungsfrequenzen von 200 Hz bis 10000 Hz eingesetzt werden. Ferner kann die Magnetkomponente als Transformatorkernelement ausgebildet sein.

Beispielsweise kann das Elektroband aus einer Fe-Legierung gefertigt sein.

Weitere Vorteile, Merkmale und Einzelheiten ergeben sich aus der nachfolgenden Beschreibung, in der - ggf. unter Bezug auf die Zeichnung - zumindest ein Ausführungsbeispiel im Einzelnen beschrieben ist. Beschriebene und/oder bildlich dargestellte Merkmale bilden für sich oder in beliebiger sinnvoller Kombination den Gegenstand der Erfindung, ggf. auch unabhängig von den Ansprüchen, und können insbesondere zusätzlich auch Gegenstand einer oder mehrerer separater Erfindungen sein. Gleiche, ähnliche und/oder funktionsgleiche Teile sind mit gleichen Bezugszeichen versehen.

Es zeigen
- Fig. 1: eine Prinzipdarstellung einer Kantenoberfläche eines Werkstücks beim Laserschneiden
- Fig. 2: eine schematische Darstellung des relativen Mengenverhältnisses von als Verdampfungsmaterial oder als Schmelze vorliegendem Elektrobandmaterial in Abhängigkeit von der Vorschubgeschwindigkeit eines Laserstrahls beim Laserschneiden
- Fig. 3.: Messkurven einer magnetischen Hysterese eines Elektroblechs für verschiedene Schneidverfahren bei 1T und 1000 Hz
- Fig. 4: Messkurven einer frequenzabhängigen Verlustleistung eines Elektroblechs für verschiedene Trennverfahren.

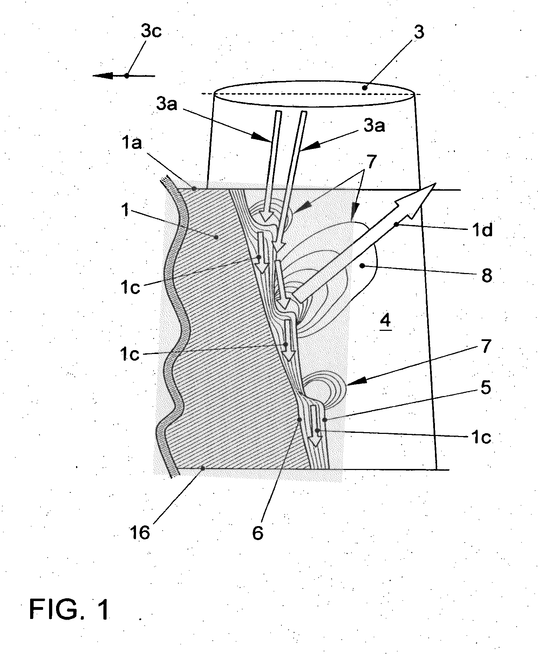

Fig. 1 zeigt eine Prinzipdarstellung eines Laserschneidens eines Werkstücks aus einem Elektrobandmaterial mittels eines Laserstrahls 3. Die mit 3a bezeichneten Pfeile sollen die Intensität des Laserstrahls 3 illustrieren.

Das Laserschneiden erfolgt mit einer nicht näher dargestellten Einrichtung zur Erzeugung eines Laserstrahls, einer Handlingeinrichtung und einer Steuereinrichtung, die ausgebildet sind, um das im Weiteren genauer dargestellte Verfahren durchzuführen. Bei der Einrichtung zur Erzeugung eines Laserstrahls handelt es sich vorzugsweise um einen diodengepumpten Single-Mode-Faser-Laser mit beispielsweise 10 kW Laserleistung, der mit hoher Vorschubgeschwindigkeit fahren kann. Die Wellenlänge des Laserstrahls kann dabei bspw. bei *λ* = 1070 nm oder 1030 nm liegen. Bevorzugt ist eine gaußförmige Verteilung der Laserstrahlintensität um einen Zentralbereich. Es versteht sich, dass auch Multi-Mode-Laserquellen mit bspw. 30 kW Laserleistung bei dem Verfahren vorteilhaft eingesetzt werden können. Die Handlingeinrichtung kann eine Scannereinheit mit einem geeigneten hochdynamischen Antrieb umfassen.

Bei dem erfindungsgemäßen Verfahren erzeugt der Laserstrahl 3 in der Teiloberfläche 1a einen Spalt 4 in Werkstück 1. Eine Verdampfungsisotherme 5 des Elektrobandmaterials ist räumlich versetzt gegenüber der Schmelzgrenze 6 des Werkstücks 1 dargestellt. In den Spalt 4 dehnen sich beim Laserschneiden die Isobaren 7 von verdampftem Material aus, wobei eine Teilmenge 8 dieser Isobaren erkennbar ist, die einer Druckausdehnung in einer der Einfallsrichtung des Laserstrahls 3 entgegen gesetzten Richtung entspricht. Bei ausreichend Geschwindigkeit des Laserstrahls wird geschmolzenes Material an der Schmelzfront nach unten getrieben, wie mit den Pfeilen 1c angedeutet ist. Dabei wird geschmolzenes Material nach dem Spalt 4 nach unten getrieben, dort umgelenkt und nach oben und im Wesentlichen entgegen der Vorschubsrichtung 3c des Laserstrahls nach hinten geworfen. Bei Überschreiten einer Grenzgeschwindigkeit des Vorschubs des Laserstrahls tritt ein Flüssigkeitsstrahl 1d nach oben aus dem Spalt 4 aus.

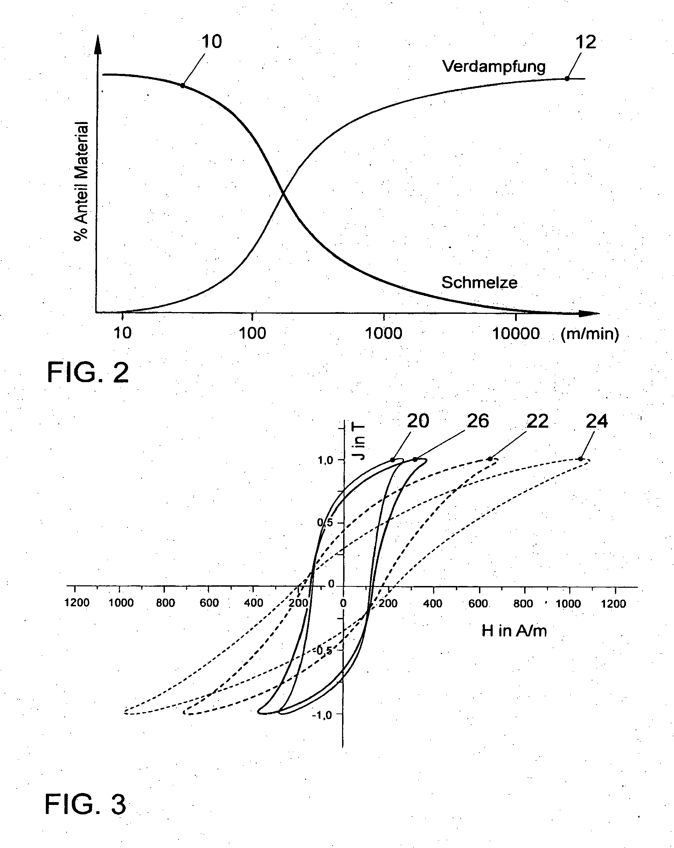

In Figur 2 ist ein prozessualer Zusammenhang zwischen den Mengen von geschmolzenem und verdampften Material beim Laserschneiden illustriert, wobei in Abhängigkeit von der an einer Abszissenachse abgetragenen Vorschubgeschwindigkeit des Laserstrahls eine Kurve 10 eine Menge an geschmolzenem Material des lasergeschnittenen Werkstücks und eine Kurve 12 eine Menge des verdampften Materials des lasergeschnittenen Werkstücks andeutet. Es ist erkennbar, dass mit wachsender Geschwindigkeit der Anteil des geschmolzenen Materials 10 sinkt, während gleichzeitig der Anteil des verdampften Materials 12 steigt. Bei ausreichend hohen Geschwindigkeiten liegt der überwiegende Anteil von im Einwirkungsbereich des Laserstrahls befindlichen Materials in verdampfter Form vor.

Das erfindungsgemäße Verfahren erlaubt es, die Eisenverluste von Werkstücken aus Elektrobandmaterial zu reduzieren, wie am folgenden Beispiel des magnetischen Hystereseverlustes bei einer Elektroband - Magnetkomponente ersichtlich ist.

In Figur 3 sind Kurvenverläufe von magnetischen Hysteresen einer aus einem nicht kornorientierten Elektroband NO20 der Firma C. D. Wälzholz hergestelltem Transformatorkomponente bei einer Frequenz der induzierten Spannung von 1000 Hz dargestellt. Bei der Transformatorkomponente handelt es sich um lamellenartigen Transformatorringkern mit 4 cm Außendurchmesser, 3 cm Innendurchmesser, mit einer Dicke von 0,2 mm, die zu einem Blechpaket mit einer Stapelhöhe von 5 mm Höhe aufeinander geschichtet wurden. Diese Ringkerne wurden jeweils mit einer Induktionsspule mit 60 Windungen und einer Feldspule mit 180Windungen gewickelt. In der Figur 3 sind auf einer Abszisse Werte des äußeren Magnetfelds H in Einheiten A/m und auf einer Ordinate Werte der magnetischen Polarisation J in Einheiten Tesla dargestellt. Die Kurve 20 bezeichnet die magnetische Hysterese bei mit einem scharfen, nicht verschlissenen Werkzeug gestanzten Lamellen, während die Kurven 22 und 24 mit herkömmlichen CO₂-Lasern und niedrigen Geschwindigkeiten geschnittene Lamellen bezeichnen. Die Kurve 26 bezeichnet die magnetische Hysterese von mit dem erfindungsgemäßen Verfahren geschnittenen Lamellen. Erkennbar ist, dass die mit dem erfindungsgemäßen Verfahren erreichte magnetische Hysterese wesentlich günstiger ist, d. h. einen geringeren Ummagnetisierungsverlust anzeigt, als die mit den herkömmlichen CO₂-Lasern 22 und 24 erreichten Hysteresen. Das erfindungsgemäße Verfahren zum Laserschneiden ermöglicht ähnlich günstige magnetische Hysteresen wie das Stanzen mit einem scharfen, noch nicht verschlissenen Werkzeug.

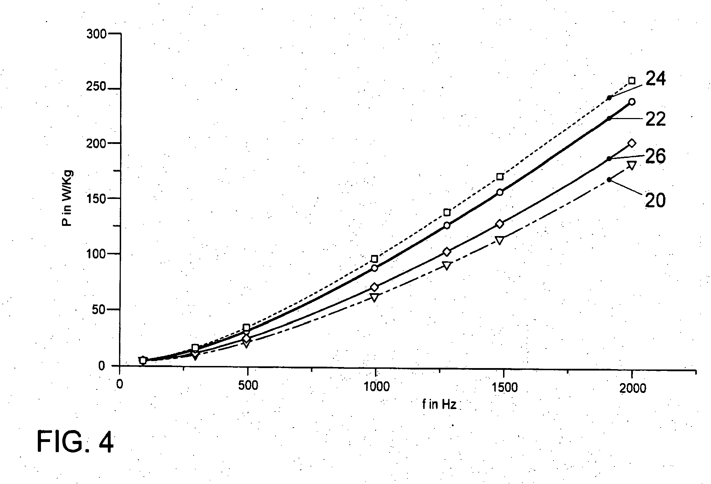

In Figur 4 sind die in Figur 3 dargestellten Ergebnisse ausgewertet. Für das gleiche Elektroblech sind die frequenzabhängige spezifische Verlustleistung P in W/kg für verschiedene Trennverfahren dargestellt. Hierbei zeigt die mit 20 bezeichnete Kurve die Verlustleistung P bei einem scharfen Werkzeug, die mit 22, 24 bezeichneten Kurven zeigen die Verlustleistungen P bei einem Schnitt mit einem herkömmlichen CO₂-Laser und die Kurve 26 zeigt die Verlustleistung P bei Verwendung des erfindungsgemäßen Verfahrens. Erkennbar ist, dass die Verlustleistung bei den mit dem erfindungsgemäßen Verfahren geschnittenen Blechlamellen wesentlich geringer ist als die Verlustleistung bei den mit dem herkömmlichen Verfahren geschnittenen Blechlamellen und nur wesentlich höher ist als die Verlustleistung, die sich ergibt, wenn mit einem scharfen Werkzeug geschnitten wurde.

## Patentansprüche

1. Verfahren zum Laserschneiden eines Werkstücks (1) aus Elektrobandmaterial mittels eines Laserstrahls (3) wobei der Laserstrahl (3) auf einer dem Laserstrahl (3) zugewandten Oberfläche des Werkstücks (1) eine Kontur abfährt und dabei einen Schneidspalt (4) erzeugt, **dadurch gekennzeichnet, dass** eine Laserstrahlleistung, ein Fokusdurchmesser und ein Vorschub des Laserstrahls (3) derartig gewählt werden, dass im Einwirkungsbereich des Laserstrahls (3) eine Druckausdehnung von verdampfendem Elektrobandmaterial zum Ausschleudern von zumindest 60 % des vom Laserstrahl geschmolzenen Elektrobandmaterials aus dem Schneidspalt (4) erzeugt wird, wozu eine Strahlleistung von mehr als 1500 Watt und weniger als 30.000 W, ein Fokusdurchmesser zwischen 100 µm und 600 µm und eine Vorschubgeschwindigkeit des Laserstrahls von mehr als 500 m/min und weniger als 1.500 m/min, eingestellt werden.

2. Verfahren nach Anspruch 1, **dadurch gekennzeichnet, dass** mittels einem mindestens zweifachem Abfahren der Kontur eine Schicht aus geschmolzenem Elektrobandmaterial mit einer Dicke zwischen 1 µm und 20 µm in einem Bereich von zumindest 60 % von zumindest einer der Schneidflächen des Schneidspalts und mit einem Volumenanteil von zumindest 15 % mit amorpher Struktur gebildet wird.

3. Verfahren nach Anspruch 1 oder 2, **dadurch gekennzeichnet, dass** mittels des Laserschneidens ein Abtragsschneiden des Elektrobandmaterials zur vollständigen Trennung des Elektrobandmaterials entlang von zumindest einer Teillänge der Kontur erfolgt.

4. Verfahren nach einem der vorhergehenden Ansprüche, **dadurch gekennzeichnet, dass** zumindest Teilbereiche des Elektrobandmaterials vor der Erzeugung des Schneidspalts (4) einer Formung mit einem mechanischen Werkzeug unterworfen werden.

5. Verfahren nach einem der vorhergehenden Ansprüche, **dadurch gekennzeichnet, dass** ein schlussgeglühtes nichtkornorientiertes Elektrobandmaterial eingesetzt wird.

6. Verfahren nach einem der vorhergehenden Ansprüche 1 bis 4, **dadurch gekennzeichnet, dass** ein kornorientiertes Elektrobandmaterial eingesetzt wird.

7. Verfahren nach einem der vorhergehenden Ansprüche, **dadurch gekennzeichnet, dass** eine Strahlleistung zwischen 2000 W und 30.000 W, ein Fokusdurchmesser zwischen 100 µm und 600 µm und eine Vorschubgeschwindigkeit des Laserstrahls (3) zwischen 800 m/min und 1.500 m/min eingestellt werden.

8. Verfahren nach einem der vorhergehenden Ansprüche, **dadurch gekennzeichnet, dass** ein Verhältnis Fokusdurchmesser/ Elektrobandmaterialdicke zwischen 2 und 10 eingestellt wird.

9. Verfahren nach einem der vorhergehenden Ansprüche, **dadurch gekennzeichnet, dass** ein Elektrobandmaterial mit einer Dicke zwischen 20 µm und 1000 µm eingesetzt wird, wobei bei einem einfachen Abfahren der Kontur im Schneidspalt (4) ein Materialabtrag zwischen 20 µm und 80 µm erfolgt.

10. Elektroblech-Werkstück (1) aus einem Elektrobandmaterial, **dadurch gekennzeichnet**, das das Werkstück (1) aus dem Elektrobandmaterial einer Fe-Legierung mittels eines Laserschneidverfahrens nach einem der vorhergehenden Ansprüche zumindest teilweise geschnitten ist, wobei zumindest 60 % der Schneidflächen mit einer Schicht aus zuvor geschmolzenem und erstarrtem Elektrobandmaterial versehen sind, deren Volumenanteil mit amorpher Struktur zumindest 15 % beträgt.

11. Elektroblech-Werkstück (1) nach Anspruch 10, **dadurch gekennzeichnet, dass** das Werkstück (1) ausgebildet ist als Rotor- oder Statorlamelle eines elektrischen Motors oder Generators.

12. Elektroblech-Werkstück (1) nach Anspruch 10, **dadurch gekennzeichnet, dass** das Werkstück (1) ausgebildet ist als Transformatorkernelement.

## Claims

1. Process for laser cutting a workpiece (1) of electric strip material by means of a laser beam (3), wherein the laser beam (3) follows a contour on a surface of the workpiece (1) that is facing the laser beam and thereby produces a cutting gap (4), **characterized in that** a laser beam output, a focus diameter and an advancement of the laser beam (3) are chosen such that a compressive expansion of the vaporizing electric strip material is produced in the region of action of the laser beam (3) to eject from the cutting gap (4) at least 60% of the electric strip material that is melted by the laser beam, for which purpose a beam output of more than 1500 W and less than 30 000 W, a focus diameter of between 100 µm and 600 µm and an advancing rate of the laser beam of more than 500 m/min and less than 1500 m/min are set.

2. Process according to Claim 1, **characterized in that**, by means of following the contour at least twice, a layer of melted electric strip material with a thickness of between 1 µm and 20 µm is formed in a region of at least 60% of at least one of the cutting surfaces of the cutting gap and with an amorphous structure in a proportion by volume of at least 15%.

3. Process according to Claim 1 or 2, **characterized in that**, by means of the laser cutting, an ablation cutting of the electric strip material takes place for the complete separation of the electric strip material along at least a partial length of the contour.

4. Process according to one of the preceding claims, **characterized in that** at least subregions of the electric strip material are subjected to a forming operation with a mechanical tool before the production of the cutting gap (4).

5. Process according to one of the preceding claims, **characterized in that** a finally annealed, non-grain-oriented electric strip material is used.

6. Process according to one of the preceding Claims 1 to 4, **characterized in that** a grain-oriented electric strip material is used.

7. Process according to one of the preceding claims, **characterized in that** a beam output of between 2000 W and 30 000 W, a focus diameter of between 100 µm and 600 µm and an advancing rate of the laser beam (3) of between 80 m/min and 1500 m/min are set.

8. Process according to one of the preceding claims, **characterized in that** a ratio of the focus diameter to the electric strip material thickness of between 2 and 10 is set.

9. Process according to one of the preceding claims, **characterized in that** an electric strip material with a thickness of between 20 µm and 1000 µm is used, following the contour once having the effect that material ablation of between 20 µm and 80 µm takes place in the cutting gap (4).

10. Electric sheet workpiece (1) of an electric strip material, **characterized in that** the workpiece (1) is at least partially cut out from the electric strip material of an Fe alloy by means of a laser cutting process according to one of the preceding claims, at least 60% of the cutting surfaces being provided with a layer of previously melted and solidified electric strip material, the proportion by volume of which with an amorphous structure is at least 15%.

11. Electric sheet workpiece (1) according to Claim 10, **characterized in that** the workpiece (1) is formed as a rotor or stator lamination of an electric motor or generator.

12. Electric sheet workpiece (1) according to Claim 10, **characterized in that** the workpiece (1) is formed as a transformer core element.

## Revendications

1. Procédé de découpe au laser d'une pièce (1) en matériau d'électrofeuillard au moyen d'un faisceau laser (3),
le faisceau laser (3) suivant un contour sur une surface de la pièce (1) tournée vers le faisceau laser (3) et formant au moins un interstice de découpe (4), **caractérisé en ce que**
la puissance du faisceau laser, le diamètre du foyer et l'avancement du faisceau laser (3) sont sélectionnés de manière à former dans la zone d'action du faisceau laser (3) un dégagement sous pression de matériau vaporisé d'électrofeuillard de manière à expulser au moins 60 % du matériau de l'électrofeuillard fondu par le faisceau laser hors de l'interstice de coupe (4) et **en ce que** dans ce but, une puissance laser supérieure à 1 500 watts et inférieure à 30 000 W, un diamètre du foyer compris entre 100 µm et 600 µm et une vitesse d'avancement du faisceau laser supérieure à 500 m/min et inférieure à 1 500 m/min sont établis.

2. Procédé selon la revendication 1, **caractérisé en ce qu'**en suivant au moins deux fois le contour, on forme une couche de matériau fondu d'électrofeuillard d'une épaisseur comprise entre 1 µm et 20 µm dans une plage qui représente au moins 60 % d'au moins l'une des surfaces de coupe de l'interstice de coupe et dont la fraction volumique à structure amorphe est d'au moins 15 %.

3. Procédé selon la revendication 1 ou 2, **caractérisé en ce qu'**au moyen de la découpe au laser, on réalise une découpe à enlèvement de matériau d'électrofeuillard en vue de séparer complètement le matériau d'électrofeuillard le long d'au moins une partie de la longueur du contour.

4. Procédé selon l'une des revendications précédentes, **caractérisé en ce qu'**au moins certaines parties du matériau d'électrofeuillard subissent un façonnage à l'aide d'un outil mécanique avant la formation de l'interstice de coupe (4).

5. Procédé selon l'une des revendications précédentes, **caractérisé en ce qu'**on utilise un matériau d'électrofeuillard ayant subi un recuit final et à grains non orientés.

6. Procédé selon l'une des revendications 1 à 4, **caractérisé en ce qu'**on utilise un matériau d'électrofeuillard à grains orientés.

7. Procédé selon l'une des revendications précédentes, **caractérisé en ce qu'**on règle une puissance du faisceau comprise entre 2 000 W et 30 000 W, un diamètre du foyer compris entre 100 µm et 600 µm et une vitesse d'avancement du faisceau laser (3) comprise entre 800 m/min et 1 500 m/min.

8. Procédé selon l'une des revendications précédentes, **caractérisé en ce qu'**on règle un rapport entre le diamètre du foyer et l'épaisseur du matériau d'électrofeuillard compris entre 2 et 10.

9. Procédé selon l'une des revendications précédentes, **caractérisé en ce qu'**on utilise un matériau d'électrofeuillard d'une épaisseur comprise entre 20 µm et 1 000 µm, avec enlèvement de matière entre 20 µm et 80 µm lorsque le contour est suivi une fois dans l'interstice de coupe (4).

10. Pièce (1) d'électrotôle en matériau d'électrofeuillard, **caractérisée en ce que** la pièce (1) est découpée au moins en partie dans le matériau d'électrofeuillard constitué d'un alliage de Fe au moyen d'une opération de découpe au laser selon l'une des revendications précédentes, au moins 60 % de la surface de coupe étant dotée d'une couche de matériau d'électrofeuillard préalablement fondu et ensuite solidifié, dont la fraction volumique à structure amorphe représente au moins 15 %.

11. Pièce (1) d'électrotôle selon la revendication 10, **caractérisée en ce que** la pièce (1) est configurée comme lamelle de rotor ou de stator pour moteur électrique ou génératrice.

12. Pièce (1) d'électrotôle selon la revendication 10, **caractérisée en ce que** la pièce (1) est configurée comme élément de noyau de transformateur.
